# EUROPEAN PATENT APPLICATION

(11) **EP 2 807 928 A1**
(43) Date of publication of application: **03.12.2014**
(21) Application number: 14162251.4
(22) Date of filing: 28.03.2014
(51) Int. Cl.: A22C 17/00, B26D 1/553, B26D 3/28

(54) **Industrial slicer**

(30) Priority: 30.05.2013 IT MI20130882
(71) Applicant: Grasselli, Giorgio, 42020 Albinea, Reggio Emilia (IT)
(72) Inventor: Grasselli, Giorgio, 42020 Albinea, Reggio Emilia (IT)
(74) Representative: Tansini, Elio Fabrizio

(57) **Abstract**

It is disclosed an industrial slicer (1) of a food product (12). The slicer comprises means (7) for guiding and conveying the food product along a conveying direction (X), comprises means (8) for pressing the food product against the guiding and conveying means (7), wherein the minimum distance (H1z) between the pressing means and the guiding and conveying means is configurable, comprises means (4) for cutting the food product into a plurality of pieces (12-1, 12-2, 12-3) according to a configured cutting pitch (S), comprises pre-pressing means (3) for exerting a pressure value on the food product, and a control unit. The control unit is configured to calculate a dimension of the pressed food product, is configured to calculate, as a function of the dimension of the food product and of a configured cutting pitch, a number of cutting pieces, is configured to calculate, as a function of the calculated number of cutting pieces and of the configured cutting pitch, a cutting dimension of the food product, is configured to set the value for the minimum distance (H1z) between the pressing means (8) and the guiding and conveying means (7) equal to the value of the cutting dimension, and is configured to control the movement of the guiding and conveying means in order to convey the food product pressing it through the minimum distance equal to the value of the cutting dimension. The cutting means are adapted to cut the pressed food product into a number of pieces equal to the calculated number of cutting pieces.

## Description

### Technical field of the invention

The present invention generally relates to the field of the industrial slicers. More specifically, the present invention concerns a slicer for the food industry for cutting products such as meat, poultry, fish or other food products with similar characteristics, including both fresh and cooked products without bones or cartilage.

### Prior art

Known industrial slicers comprise a lower belt that conveys the product to be cut, an upper belt that has the function of pressing the product as it is being cut so as to keep it in a fixed position with respect to the lower belt, and one or more blades mounted in proximity to the upper belt so as to cut the product into slices, strips or cubes of various dimensions.

The upper belt can be fixed or floating; in this latter case, it is controlled by a pneumatic pressure or by the mechanical pressure of a spring.

PCT patent application with publication number WO00/65922 filed on March 30, 2000 in the name of Grasselli Giorgio discloses an automatic machine for cutting raw meats products into slices of predetermined weight. The machine comprises a housing for a piece of meat, cutting means able to obtain a plurality of slices from the piece of meat, feeding means between the piece of meat and the cutting means and means for removing the slices obtained from the automatic machine. The machine further comprises means for compressing the piece able to distribute uniformly the piece itself inside the housing and to make it assume, and maintain during the cutting operation, a substantially parallelepiped shape. The Applicant has observed that one disadvantage of the slicers having a fixed upper belt is to require that the food product to be cut is calibrated (that is, that the weight and dimensions thereof are substantially constant), otherwise the cut pieces will not be uniform and they are not of good quality. Slicers having the floating upper belt, instead, allow to obtain uniformly cut pieces, but they have the drawback that an excessive amount of food product is discarded.

### SUMMARY OF THE INVENTION

The present invention relates to an industrial slicer as defined in the enclosed claim 1 and by its preferred embodiments disclosed in the dependent claims from 2 to 4.

The Applicant has perceived that the industrial slicer according to the present invention allows to obtain from the food product a number of uniform pieces (for example, having a thickness which is substantially equal each other) and of good quality, reducing at the same time the amount of food product that is discarded. Moreover, it has the advantage to allow to obtain high production volumes.

It is also an object of the present invention a method for cutting a food product into slices as defined in the enclosed claim 5 and in the preferred embodiment disclosed in the dependent claim 6.

It is also an object of the present invention a computer program as defined in the enclosed claim 7.

### BRIEF DESCRIPTION OF THE DRAWINGS

Further characteristics and advantages of the invention will result from the following description of a preferred embodiment and variants thereof provided by way of example with reference to the accompanying drawings, wherein:
- Figure 1 shows a schematic perspective view of an industrial slicer according to an embodiment of the invention;
- Figure 2 shows a schematic view of the cross section of the industrial slicer according to the embodiment of the invention;
- Figures 3A-3B show two schematic perspective views of means for pre-pressing the food product of the industrial slicer according to the embodiment of the invention;
- Figure 4A shows a partial schematic sectional view of the industrial slicer according to the embodiment of the invention;
- Figure 4B is a simplified, partial perspective view of the industrial slicer according to the embodiment of the invention;
- Figure 5 is a flow diagram of a method for cutting a food product into a plurality of pieces according to the embodiment of the invention.

### DETAILED DESCRIPTION OF THE INVENTION

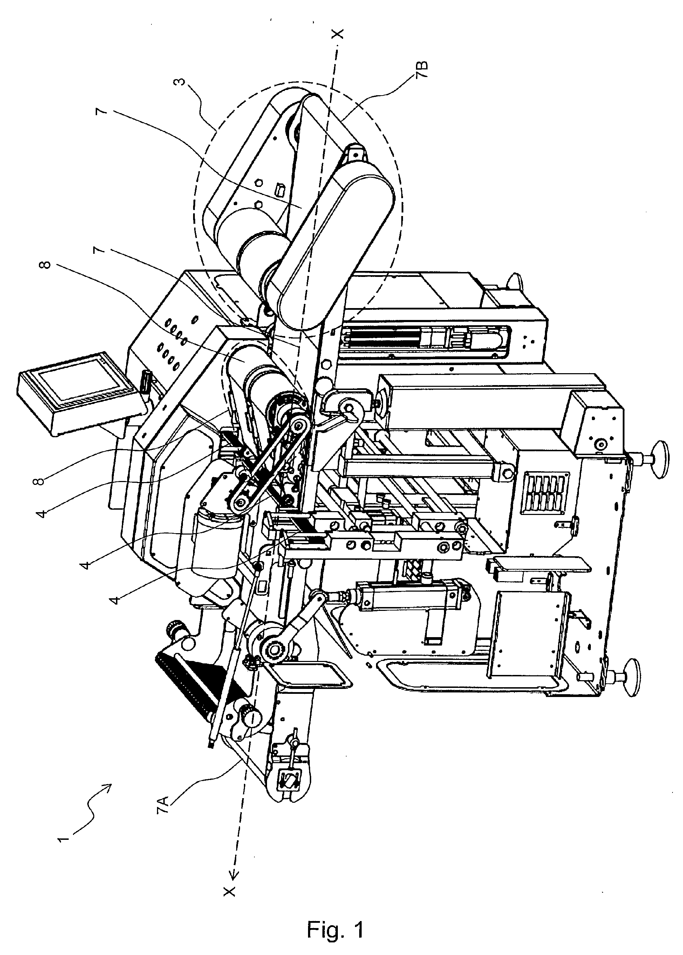

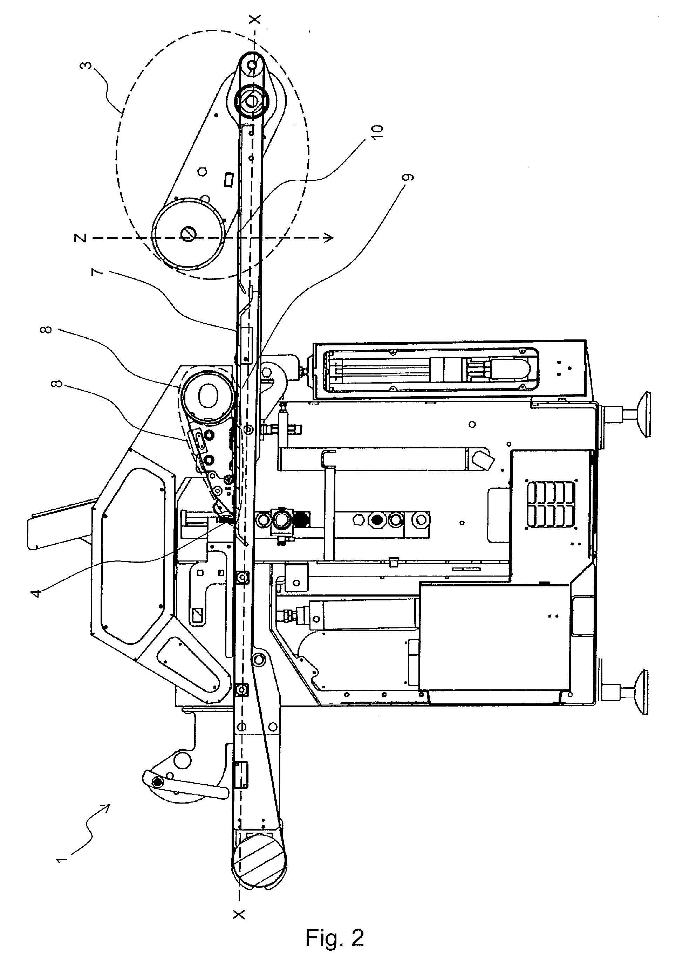

Referring to Figures 1 and 2, they show a schematic perspective view and a schematic view of the cross-section of an industrial slicer 1 according to an embodiment of the invention.

The industrial slicer 1 performs the cut of a food product into pieces that can be slices, strips or cubes. The food product can be a piece of meat, poultry, fish or other food products with similar characteristics, including both fresh and cooked products, as long as they are without bones or cartilage.

The industrial slicer 1 comprises:
- a frame;
- means 7 for guiding and conveying the product;
- pressing means 8;
- means 4 for cutting the product;
- pre-pressing means 3;
- a control unit.

The frame has the function of supporting the structural and movable elements of the industrial slicer 1.

The guiding and conveying means 7 have the function of conveying the food product to be cut towards the cutting means 4, along a conveying direction X for the food product.

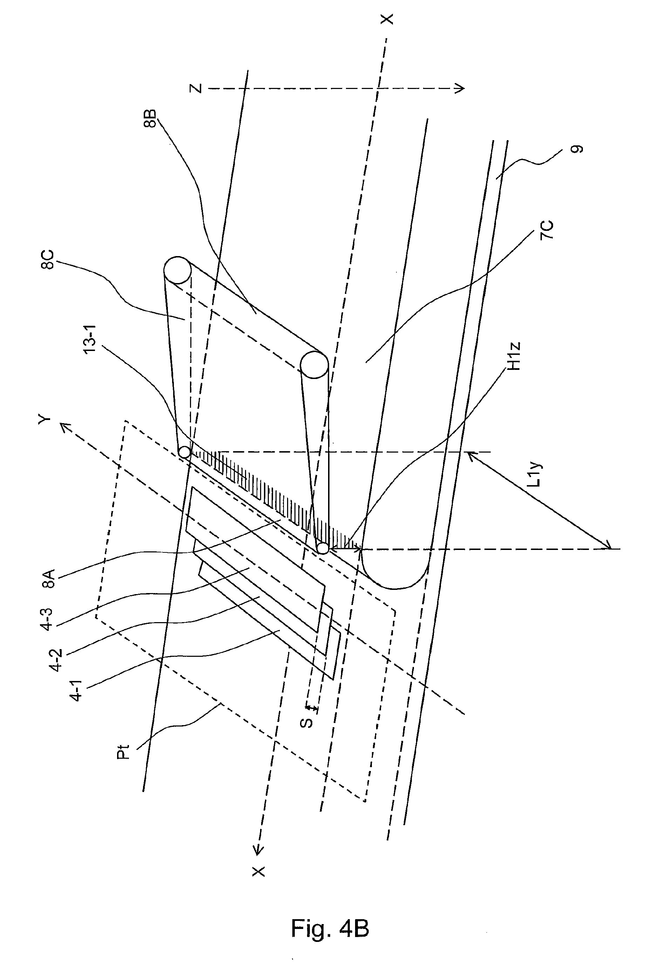

The pressing means 8 have the function of pressing the food product to be cut against the guiding and conveying means 7, in order to keep the food product into a fixed position with respect to the guiding and conveying means 7 as it is being cut and to allow a precise cut of the food product. Moreover, the minimum distance H1z (see Figure 4B) between the pressing means 8 and the guiding and conveying means 7 is configurable, that is it can be changed by the control unit in order to optimising the cutting process, as it will be explained in further detail below.

The cutting means 4 have the function of cutting the food product into a plurality of pieces, according to a configured cutting pitch S, that is set by the user of the industrial slicer 1 before the beginning of the process of cutting the food product; furthermore, the cutting means 4 are configured to cut the food product into a number of pieces that is calculated by the control unit, as it will be explained in further detail below.

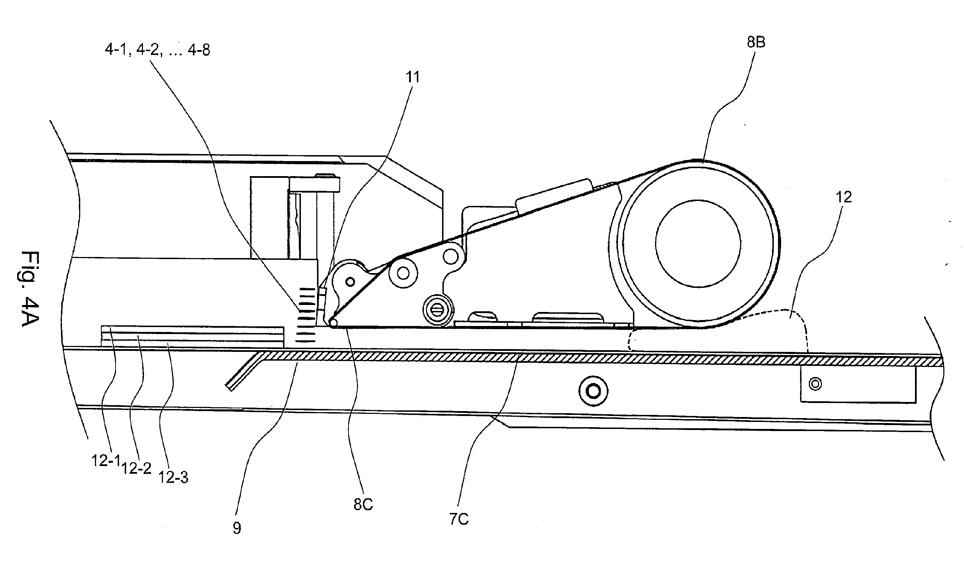

Preferably, with reference to Figures 4A and 4B, the cutting means 4 are made of a plurality of parallel blades 4-1, 4-2, 4-3 having a cutting plane Pt parallel to the conveying direction X and a cutting movement in a direction Y that is perpendicular to the conveying direction X.

It is observed that Figure 4B is a simplified view compared to that of Figure 4A.

Advantageously, the cutting movement of the plurality of blades 4-1, 4-2, 4-3 is an alternative movement in the opposite direction, so as to improve the stability of the food product during the cutting process. The pitch S between the blades 4-1, 4-2, 4-3 is set by the user of the industrial slicer 1 before the cutting process, as a function of the desired thickness of the pieces. It is observed that for the sake of simplicity, eight blades 4-1, 4-2 ... 4-8 are shown in Figure 4A and three blades 4-1, 4-2, 4-3 are shown in Figure 4B, but more in general the number of blades present is greater than one.

The pre-pressing means 3 are configured to exert a pressure value P1 on the food product, by means of a force in a direction Z that is substantially perpendicular to the conveying direction X. In this way the working condition of the food product during the cutting process is simulated, wherein the food product is pressed so as to be kept in a fixed position with respect to the guiding and conveying means 7 and thus it can be cut precisely: this allows the control unit to calculate a dimension of the food product under conditions similar to the actual working conditions, as it will be explained in further detail herein below. Moreover, the pressure P1 exerted by the pre-pressing means 3 allows to reduce the maximum height of the food product. The pressure value P1 is configured by the user of the industrial slicer 1 before the beginning of the process of cutting the food product and it is kept constant at the value P1 during the cutting process. The value of pressure P1 depends on the type of food product (for example, beef or poultry) and on the type of preservation employed for the food product (for example, whether the product has just left the refrigerator or it is at ambient temperature).

The control unit has the function to controll the movement of the guiding and conveying means 7, the movement of the pressing means 8 and the movement of the cutting means 4, by means of suitable electric motors. The control unit also has the function of calculating the dimension of the pressed food product, that is under the conditions wherein the food product to be cut is subjected to the pressure value P1 exerted by the pre-pressing means 3. For example, the dimension of the food product is the height of the food product with respect to the plane defined by the guiding and conveying means 7 (that is, with respect to the plane XY); in the case wherein the height of the food product is variable, the calculated dimension of the food product is the maximum height of the food product. The control unit also has the function of calculating, as a function of the calculated dimension of the food product and of a configured cutting pitch S, a number of cutting pieces, as it will be explained in further detail herein below.

The control unit also has the function of calculating, as a function of the calculated number of cutting pieces and of the configured cutting pitch S, a cutting dimension of the food product, as it will be explained in further detail herein below; preferably, the cutting dimension is calculated by further taking into account one or more correction parameters set by the user, which depend on the type of food product and on the operating conditions.

The control unit also has the function of setting the value for the minimum distance H1z between the pressing means 8 and the guiding and conveying means 7 equal to the value of the calculated cutting dimension of the food product.

The control unit also has the function of controlling the movement of the guiding and conveying means 7 in order to convey the food product through the minimum distance H1z that is substantially equal to the value of the calculated cutting dimension, as it will be explained in further detail herein below.

The control unit can be mounted on the industrial slicer 1 or it can be external thereto.

The control unit is for example of a programmable logic circuit or a microcontroller which is such as to execute the above indicated functionalities . Alternatively, the control unit can be a micro-processor which is such as to execute software code portions that implement the above indicated functionalities .

Preferably, the guiding and conveying means 7 are composed of a conveyor belt 7C arranged in a closed loop on a pair of rollers 7A, 7B, wherein one is the driving roller and the other is the driven roller and wherein the conveyor belt 7C is such to define the conveying direction X. In this case, the plane XY corresponds to the upper surface defined by the conveyor belt 7C. In a similar manner, the pressing means 8 are constituted by a pressing belt 8C arranged in a closed loop on a pair of rollers 8A, 8B, wherein one is the driving roller and the other is the driven roller, and wherein the direction defined by the lower surface of the pressing belt 8C is inclined with respect to the direction defined by the upper surface of the conveyor belt 7C.

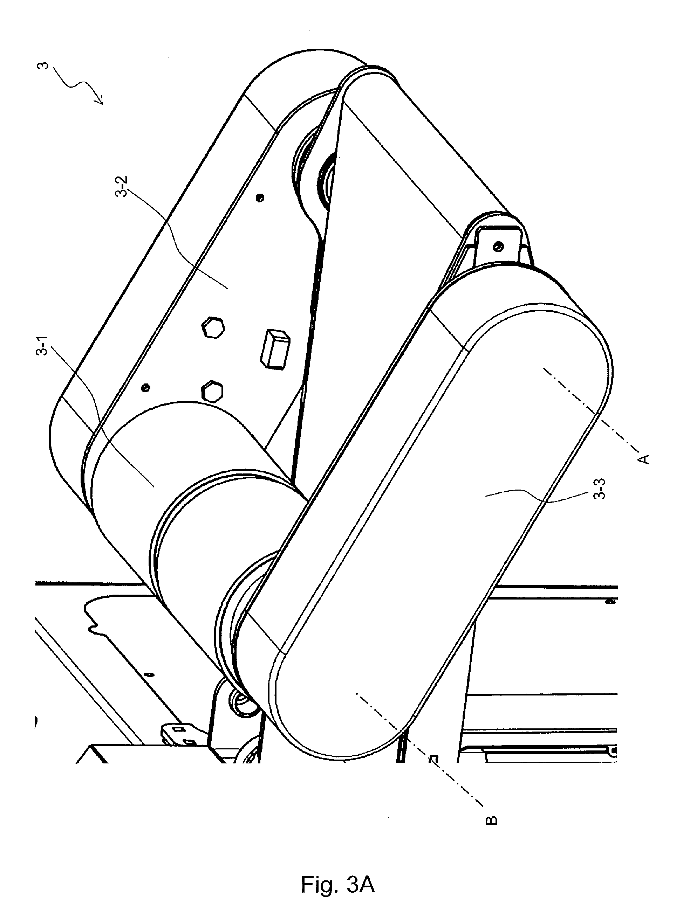

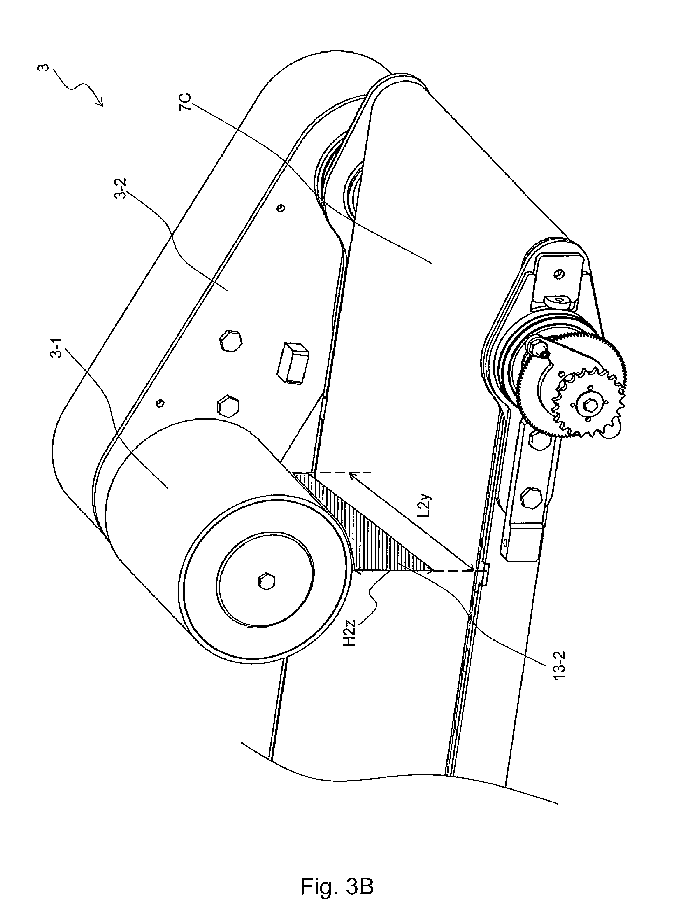

Moreover, there is a rigid plane surface 9 (for example, made of steel) below the conveyor belt 7C, said plane surface 9 being substantially parallel to the plane defined by the conveyor belt 7C and extending in length at least along the roller 8A of the pressing belt 8C; in this manner, the food product to be cut is placed on the upper surface of the conveyor belt 7C, is conveyed towards the roller 8A, comes into contact with the roller 8A and at that point it is pressed against the conveyor belt 7C. Advantageously, referring to Figures 3A and 3B, the pre-pressing means 3 are implemented with a rotating roller 3-1 having a peripheral velocity equal to that of the conveyor belt 7C and a rotation direction parallel to the conveying direction X. The rotating roller 3-1 is supported oscillatably around an oscillation axis in such a way to result liftable with respect to the upper surface of the conveyor belt 7C. In particular, the rotating roller 3-1 is rotatably mounted around an axis "B" on a pair of arms 3-2, 3-3, which are hinged to a portion of the frame so as to rotate around a respective oscillation axis "A" which is parallel and shifted with respect to the rotation axis "B" of the rotating roller 3-1. In this case, the control unit is such to receive a signal indicating the angle defined by the arm 3-2 (or by the arm 3-3) when the food product passes under the roller 3-1 and it is such to calculate, as a function of the value of said signal, the dimension of the pressed food product, in particular the height thereof with respect to the plane defined by the upper surface of the conveyor belt 7.

The oscillation lifting the rotating roller 3-1 undergoes the action of at least one opposing spring (preferably, one spring per arm) that operated in such a manner as to keep the rotating roller 3-1 pressed against the conveyor belt 7C.

Preferably, the spring is applied to the arm 3-2 in an adjustable manner, in particular it has a plurality of positions for attachment to the arm 3-2 in such a manner as to implement a plurality of values for the pressure P1 exerted on the food product that is conveyed on the conveyor belt 7C and comes into contact with the roller 3-1. The same considerations apply to the spring applied to the arm 3-3.

Moreover, there is a rigid plane surface 10 (for example, made of steel) below the conveyor belt 7C, said plane surface 10 being substantially parallel to the plane defined by the upper surface of the conveyor belt 7C and extending in length at least along the roller 3-1; in thisway the food product to be cut is placed on the upper surface of the conveyor belt 7C, is conveyed towards the roller 3-1, comes into contact with the roller 3-1 which is lifted upwards with respect to the upper surface of the conveyor belt 7C and at that point the food product is pressed against the conveyor belt 7C.

Figure 3B differs from Figure 3A in that the arm 3-3 and part of the rotating roller 3-1 connected thereto have been eliminated. In Figure 3B an opening 13-2 (indicated by the area marked with diagonal lines) can be defined, said opening 13-2 having in the direction Y (that is, the direction perpendicular to the upper surface of the conveyor belt 7C) a width L2y equal to the width of the conveyor belt 7C and having in the direction Z a height H2z defined by the distance between the upper surface of the conveyor belt 7C and the surface of the roller 3-1.

The roller 3-1 is lifted upwards with respect to the surface of the conveyor belt 7C (more precisely, following a arc-shaped trajectory of a circle centred on the oscillation axis "A" of the arms 3-2, 3-3) following the height of the food product as it is conveyed along the conveyor belt 7C and passes through the opening 13-2, wherein the food product is in contact with the roller 3-1 that rolls over the food product.

Referring to Figure 4B, an opening 13-1 (indicated by the area marked with diagonal lines) can be defined in proximity to the blades 4-1, 4-2, 4-3, said opening 13-1 having in the direction Y (that is, the direction perpendicular to the upper surface of the conveyor belt 7C) a width L1y equal to the width of the conveyor belt 7C and having in the direction Z a height H1z defined by the distance between the upper surface of the conveyor belt 7C and the lower surface of the pressing belt 8C at the point where it is wound around the roller 8A.

Preferably, a guiding plate 11 (see Figure 4A) is interposed between the pressing belt 8 and the plurality of blades 4-1, 4-2, 4-3, said guiding plate having the function of maintaining the food product in a pressed configuration preventing the food product from tending to return to an expanded configuration at the end of the pressing belt 8C (that is, at the winding point around the roller 8A) and thus preventing irregular cutting of the food product. Preferably, said guiding plate 11 facilitates detachment of the food product from the pressing belt 8, as it acts as a scraping element.

It will be described hereinafter the method for cutting the food product into a plurality of pieces, referring also to Figures 1-4.

It is supposed that the food product is a piece of meat (e.g. poultry) and that the cut pieces are slices of meat 12-1, 12-2, 12-3.

It is supposed to use the conveyor belt 7C, the pressing belt 8C and the rotating roller 3-1.

It is further supposed that the cutting means are composed of twenty blades 4-1, 4-2 ... 4-20 with the cutting plane Pt parallel to the conveying direction X and an alternative cutting movement in the direction Y perpendicular to the conveying direction X, wherein the value of the pitch S between the blades 4-1, 4-2 ... - 4-20 has been set at 4 millimetres by the user.

It is also supposed to measure the height of the piece of meat with respect to the plane defined by the upper surface of the conveyor belt 7C.

It is also supposed that the user of the industrial slicer 1 has configured the pressure value P1 between the rotating roller 3-1 and the conveyor belt 7C, as a function of the type of food product (i.e., the piece of meat is poultry meat).

At time t₀ the piece of meat to be cut is placed on the upper surface of the conveyor belt 7C, to the right of the rotating roller 3-1 in the normal orientation shown in Figures 1-4.

In the interval comprised between t₁ (subsequent to t₀) and t₂ (subsequent to t₁), the piece of meat is guided on the upper surface of the conveyor belt 7C in the conveying direction X (that is, towards the plurality of blades 4-1, 4-2 ... 4-20).

At time t₃ (subsequent to t₂), the piece of meat starts to pass through the opening 13-2 defined between the conveyor belt 7C and the surface of the roller 3-1; the piece of meat comes into contact with the roller 3-1 and thus it begins to be pressed at a pressure having a value equal to the pressure value P1, by means of the pressure exerted by the roller 3-1 against the conveyor belt 7C. The control unit calculates a transition of the height of the piece of meat from a value equal to zero to a value greater than zero (for example, equal to 5.3 centimetres) and thus it detects the presence of the piece of meat.

In the interval comprised between t₄ (subsequent to t₃) and t₅ (subsequent to t₄) the piece of meat passes through the entire opening 13-2 defined between the surface of the roller 3-1 and the upper surface of the conveyor belt 7C; the roller 3-1 rolls over the upper surface of the piece of meat, continues to exert the pressure P1 on the piece of meat and the roller 3-1 is also lifted upwards with respect to the surface of the conveyor belt 7C, following the variable height of the piece of meat. The control unit calculates the several values of the heights of the piece of meat pressed at the pressure value P1. Upon completion of this pre-pressing step the maximum height of the piece of meat is lower.

At time t₆ (subsequent to t₅) the control unit detects that the height of the piece of meat is equal to zero: this indicates that the piece of meat has passed through the entire opening 13-2 defined between the surface of the roller 3-1 and the upper surface of the conveyor belt 7C. The control unit then calculates the maximum height Hₘₐₓ among the values of the calculated heights (for example, Hₘₐₓ= 6.2 cm). It is noted that the values of the heights of the piece of meat are calculated when the piece of meat is pressed, in particular when it is pressed at a pressure value equal to the configured pressure value P1; in this way the working condition of the piece of meat during the cutting process is simulated, wherein the piece of meat is pressed so as to be maintained in a fixed position with respect to the conveyor belt 7C and be cut precisely.

Moreover, at time t₆ the control unit calculates the number N of slices of meat, as a function of the maximum height Hₘₐₓ of the piece of meat and of the configured cutting pitch S. For example, let's consider Hₘₐₓ= 6.2 cm and S= 4 mm; the control unit performs the division of the value of Hₘₐₓ by the value of S, obtaining the value N_d= 15.5. The value N_d is typically a decimal number, which can be rounded down or up to an integer number, that is to 15 or 16 respectively. Let's assume that the value N_d= 15.5 is rounded down to the integer number 15, thus obtaining the number of slices of meat N= 15; this means that it is possible to obtain fifteen slices of meat of good quality from the piece of meat, all having a thickness substantially equal to 4 mm, thereby minimising or even eliminating waste (that is, the amount of slices that are not considered to be of good quality, for example because they do not conform to the required thickness). Moreover, at time t₆ the control unit calculates the value of a cutting height for the piece of meat, as a function of the calculated number of slices N and of the cutting pitch S. In the considered example , the control unit performs a multiplication of the calculated number of slices N=15 by the cutting pitch S= 4 mm, thereby obtaining the cutting height equal to 6 cm. As a result, at time t₆ the control unit 1 sets the value for the distance H1z between the upper surface of the conveyor belt 7C and the pressing belt 8C (at the point where it is wound around the roller 8A) equal to the calculated value of the cutting height. In the considered example, the control unit 1 sets the distance H1z equal to 6 cm; in thisway fifteen blades 4-1, 4-2.... 4-15 are uncovered and these blades will allow to obtain N=15 slices of meat (see the subsequent intervals comprised between t₈ and t₁₀).

In the interval comprised between t₇ (subsequent to t₆) and t₈ (subsequent to t₇) the control unit drives the movement of the conveyor belt 7C and conveys the piece of meat 12 towards the roller 8A of the pressing belt 8C. At time t₈ (subsequent to t₇) the piece of meat 12 begins to pass through the opening 13-1 defined in proximity to the blades 4-1, 4-2 ... 4-20, between the conveyor belt 7C and the pressing belt 8C at the point where it is wound around the roller 8A, wherein the distance H1z between the conveyor belt 7C and the pressing belt 8C is equal to the previously calculated value of the cutting height (in the considered example, H1z= 6 cm): the food product thus begins to be pressed.

In the interval comprised between t₉ (subsequent to t₈) and t₁₀ (subsequent to t₉) the piece of meat 12 passes through the opening 13-1 defined between the conveyor belt 7C and the pressing belt 8C at the point where it is wound around the roller 8A; the piece of meat 12 continues to be pressed (in the considered example, at a pressure P2 slightly higher than the first pressure value P1) and is then maintained in a fixed position with respect to the conveyor belt 7C. At this point, the blades 4-1, 4-2, ... 4-15 begin to cut the piece of meat 12 into the previously calculated number of slices N (in the considered example, N=15). The conveyor belt 7C continues to convey the partially cut piece of meat in the conveying direction X; in this manner, the piece of meat continues to be cut by the blades 4-1, 4-2, ... 4-15, until it is cut completely and thus the number N of slices of meat 12-1, 12-2, 12-3, ... is obtained (in the considered example, N=15).

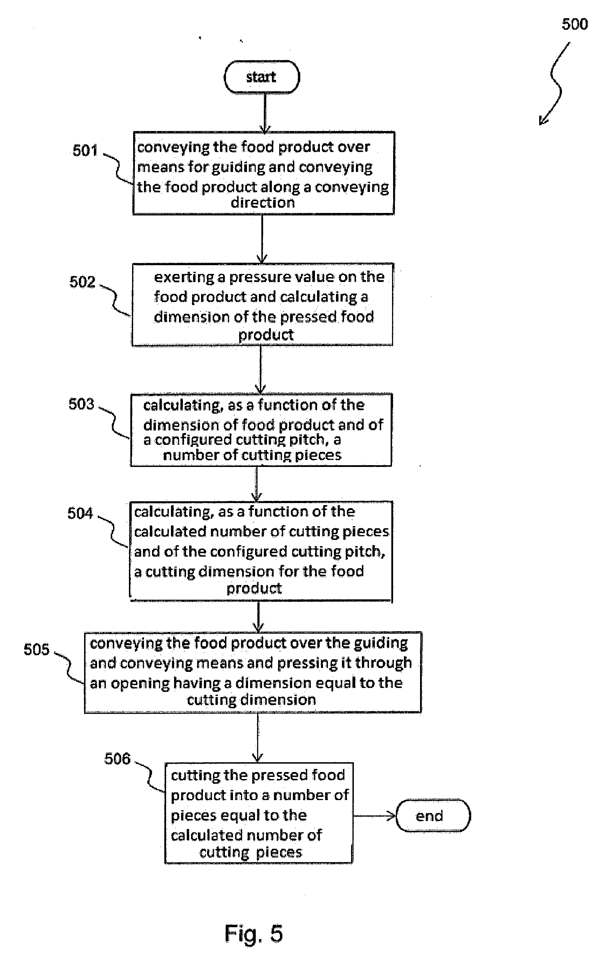

It is alo an object of the present invention a method 500 for cutting a food product into a plurality of pieces, as shown in Figure 5.

In particular, in step 501 the food product is conveyed over the means 7 for guiding and conveying the product along the conveying direction X.

In step 502 a first pressure value P1 is exerted on the food product and a dimension of the food product is calculated.

In step 503 a number of cutting pieces is calculated, as a function of the dimension of the product and of a configured cutting pitch.

In step 504 a cutting dimension for the food product is calculated, as a function of the calculated number of cutting pieces and of the configured cutting pitch,.

In step 505 the food product is conveyed over the guiding and conveying means 7, pressing the food product through the opening 13-1 having the dimension H1z equal to the cutting dimension.

In step 506 the pressed food product is cut into a number of pieces N equal to the calculated number of cutting pieces.

Calculation of the dimension of the food product in step 502 and in steps 503, 504 is carried out by means of software code portions, which executed on the control unit mounted on the industrial slicer 1 or externally thereto.

## Claims

1. Industrial slicer (1) of a food product (12), the slicer comprising:
- means (7) for guiding and conveying the food product along a conveying direction (X);
- means (8) for pressing the food product against the guiding and conveying means (7);
**characterized in that** the minimum distance (H1z) between the pressing means and the guiding and conveying means is configurable,
and **characterized in that** the industrial slicer further comprises:
- means (4) for cutting the food product into a plurality of pieces (12-1, 12-2, 12-3) according to a configured cutting pitch (S);
- pre-pressing means (3) for exerting a pressure value on the food product;
- a control unit configured to:
• calculate a dimension of the pressed food product;
• calculate, as a function of the dimension of the food product and of a configured cutting pitch, a number of cutting pieces;
• calculate, as a function of the calculated number of cutting pieces and of the configured cutting pitch, a cutting dimension of the food product;
• set the value for the minimum distance (H1z) between the pressing means (8) and the guiding and conveying means (7) equal to the value of the cutting dimension;
• control the movement of the guiding and conveying means in order to convey the food product pressing it through the minimum distance equal to the value of the cutting dimension;
wherein the cutting means are adapted to cut the pressed food product into a number of pieces equal to the calculated number of cutting pieces, wherein the control unit is configured to calculate the number of cutting pieces by dividing the calculated dimension of the food product by the configured cutting pitch and rounding the result of the division up or down to the preceding or following integer number,
and wherein the control unit is configured to calculate the cutting dimension by multiplying the rounded result of the division by the configured cutting pitch,
wherein the cutting means have a cutting plane (Pt) that is substantially parallel to the conveying direction (X) and have a cutting movement in a direction (Y) that is substantially perpendicular to the conveying direction (X),
wherein the dimension of the food product is the height of the food product with respect to the plane defined by the guiding and conveying means, and wherein the direction of the minimum distance is substantially perpendicular to the plane (XY) defined by the guiding and conveying means.

2. Industrial slicer according to claim 1, wherein the guiding and conveying means are a conveyor belt (7C) and the pressing means are a pressing belt (8C) having a length shorter than the length of the conveyor belt, wherein the pre-pressing means comprises:
• a rotating roller (3-1) having a peripheral velocity substantially equal to that of the conveyor belt and being oscillating with respect to the surface of the conveyor belt;
• at least one arm (3-2, 3-3) for connecting the rotating roller to a portion of the frame;
wherein the control unit is configured to:
- detect the angle defined by at least one arm when the food product passes under the rotating roller;
- calculate, as a function of the detected angle, the value of the minimum distance between the conveyor belt and the pressing belt.

3. Industrial slicer according to at least one of the previous claims, wherein the dimension of the food product is the maximum dimension of the food product, in particular the maximum height.

4. Industrial slicer according to claims 2 or 3, further comprising a guiding plate (11) interposed between the pressing belt (8C) and the cutting means, configured to keep the food product pressed during the cutting process.

5. Method (500) for cutting a food product into a plurality of pieces, comprising the steps of:
a) conveying (501) the food product over means for guiding and conveying (7) the food product along a conveying direction;
caracterized in that the method further comprises the steps of:
b) exerting (502) a pressure value on the food product and calculating a dimension of the pressed food product;
c) calculating (503) a number of cutting pieces dividing the dimension of the food product by the configured cutting pitch and rounding the result of the division up or down to the preceding or following integer number, wherein the dimension of the food product is the height of the food product with respect to the plane defined by the guiding and conveying means;
d) calculating (504) a cutting dimension for the food product by multiplying the rounded result of the division by the configured cutting pitch;
e) conveying (505) the food product over the guiding and conveying means and pressing it through an opening (13-1) having a dimension (H1z) equal to the cutting dimension, wherein said dimension (H1z) has a direction which is substantially perpendicular to the plane (XY) defined by the guiding and conveying means;
f) cutting (506), in a cutting plane (Pt) which is substantially parallel to the conveying direction (X) and which has a cutting movement in a direction (Y) that is substantially perpendicular to the conveying direction (X), the pressed food product into a number of pieces equal to the calculated number of cutting pieces.

6. Method according to claim 5, wherein the dimension of the food product is the maximum dimension of the food product, in particular the maximum height of the food product with respect to the plane defined by the guiding and conveying means.

7. Computer program comprising software code portions adapted to perform the calculation of step b) and the steps c), d) of the method according to claims 5 or 6, when said program is run on a computer.
